# EUROPEAN PATENT APPLICATION

(11) **EP 3 952 210 A1**
(43) Date of publication of application: **09.02.2022**
(21) Application number: 20189300.5
(22) Date of filing: 04.08.2020
(51) Int. Cl.: H04L 12/24, H04L 12/26

(54) **APPARATUSES AND METHODS FOR NETWORK TOPOLOGY DETECTION**

(71) Applicant: Moxa Inc., New Taipei City 231 (TW)
(72) Inventor: SHEN, Chun-Yi, New Taipei City (TW); CHANG, Tung-Tsai, New Taipei City (TW); CHEN, Yen-Ting, New Taipei City (TW)
(74) Representative: Patentship Patentanwaltsgesellschaft mbH

(57) **Abstract**

A method executed by an apparatus capable of communicating with other apparatuses in a local area network is provided. The method may include the following steps: broadcasting a first LLDP packet including first network topology information of the local area network; receiving a second LLDP packet including second network topology information of the local area network; in response to the second network topology information not matching the first network topology information, updating the first network topology information by incorporating the second network topology information; and in response to the second network topology information matching the first network topology information, determining the first network topology information as finalized for indicating the arrangement of all apparatuses in the local area network.

## Description

### BACKGROUND OF THE APPLICATION

### Field of the Application

The application generally relates to network management/configuration, and more particularly, to apparatuses and methods for network topology detection.

### Description of the Related Art

In the field of network management/configuration, the first and foremost issue is to recognize the connection relation (referred to herein as the network topology) between terminals, switches, and the like, which exist inside the network. The example of a local area network installed on a train that has various types of cars will be used. The network topology of such a local area network is often determined manually by the train operator. Based on the network topology, a corresponding configuration file can be selected in order to configure the local area network. However, the manual detection of network topology can be inefficient, not to mention that the result of manual detection of network topology may be erroneous, and the wrong configuration file may be selected, causing the network configuration to fail.

A solution is sought for improving the process of network topology detection.

### BRIEF SUMMARY OF THE APPLICATION

In order to solve the aforementioned problem, the present application proposes to utilize the Link Layer Discovery Protocol (LLDP) to realize automation of network topology detection. Please note that, in conventional practices, the LLDP is generally used to provide information regarding the identity and/or the capability of a network device, instead of being used for network topology detection.

In a first aspect of the application, an apparatus disposed in a local area network is provided. The apparatus comprises a Network Communication Interface (NCI), a storage medium, and a controller is provided. The NCI is configured to enable the network device to communicate with other apparatuses in the local area network. The storage medium is configured to store first network topology information of the local area network. The controller is coupled to the storage medium and the NCI, and configured to perform the following: broadcasting a first LLDP packet comprising first network topology information of the local area network via the NCI; receiving a second LLDP packet comprising second network topology information of the local area network via the NCI; in response to the second network topology information not matching the first network topology information, updating the first network topology information by incorporating the second network topology information; and in response to the second network topology information matching the first network topology information, determining the first network topology information as finalized for indicating an arrangement of all apparatuses in the local area network.

In a first implementation form of the first aspect, the controller is further configured to perform the following: before broadcasting the first LLDP packet, setting the first network topology information of the local area network to an indication of a type of car where of the apparatus is disposed.

In a second implementation form of the first aspect, the controller is further configured to perform the following in response to the second network topology information not matching the first network topology information: broadcasting a third LLDP packet comprising the updated first network topology information of the local area network via the NCI; receiving a fourth LLDP packet comprising third network topology information of the local area network via the NCI; in response to the third network topology information not matching the updated first network topology information, further updating the first network topology information by incorporating the third network topology information; and in response to the third network topology information matching the updated first network topology information, determining the updated first network topology information as finalized for indicating the arrangement of all apparatuses in the local area network.

In a third implementation form of the first aspect or in combination with the second implementation form of the first aspect, the controller is further configured to perform the following: sending a Dynamic Host Configuration Protocol (DHCP) discover message comprising the finalized first network topology information to a predetermined port of the NCI.

In a fourth implementation form of the first aspect in combination with the third implementation form of the first aspect, the predetermined port is connected to a Central Control Unit (CCU) of the local area network.

In a fifth implementation form of the first aspect in combination with the third implementation form of the first aspect, the controller is further configured to perform the following: in response to sending the DHCP discover message, receiving a DHCP offer message comprising a first Internet Protocol (IP) address allocated to the apparatus from the CCU via the NCI; using the first IP address to request a configuration file from the CCU via the NCI, wherein the configuration file comprises configuration parameters for the apparatus and a second IP address allocated to a neighboring apparatus; and configuring the apparatus based on the configuration parameters and forwarding the second IP address to the neighboring apparatus via the NCI.

In a sixth implementation form of the first aspect, the first network topology information or the second network topology information is carried in an optional type-length-value (TLV) of the first LLDP packet or the second LLDP packet.

In a second aspect of the application, a method, executed by an apparatus capable of communicating with other apparatuses in a local area network, is provided. The method comprises the following steps: broadcasting a first LLDP packet comprising first network topology information of the local area network; receiving a second LLDP packet comprising second network topology information of the local area network; in response to the second network topology information not matching the first network topology information, updating the first network topology information by incorporating the second network topology information; and in response to the second network topology information matching the first network topology information, determining the first network topology information as finalized for indicating an arrangement of all apparatuses in the local area network.

In a first implementation form of the second aspect, the method further comprises: before broadcasting the first LLDP packet, setting the first network topology information of the local area network to an indication of a type of car where of the apparatus is disposed.

In a second implementation form of the second aspect, the method further comprises: the following in response to the second network topology information not matching the first network topology information: broadcasting a third LLDP packet comprising the updated first network topology information of the local area network; receiving a fourth LLDP packet comprising third network topology information of the local area network; in response to the third network topology information not matching the updated first network topology information, further updating the first network topology information by incorporating the third network topology information; and in response to the third network topology information matching the updated first network topology information, determining the updated first network topology information as finalized for indicating the arrangement of all apparatuses in the local area network.

In a third implementation form of the second aspect or in combination with the second implementation form of the second aspect, the method further comprises: sending a Dynamic Host Configuration Protocol (DHCP) discover message comprising the finalized first network topology information to a predetermined port of a Network Communication Interface (NCI) of the apparatus.

In a fourth implementation form of the second aspect in combination with the third implementation form of the second aspect, the predetermined port is connected to a Central Control Unit (CCU) of the local area network.

In a fifth implementation form of the second aspect in combination with the third implementation form of the second aspect, the method further comprises: in response to sending the DHCP discover message, receiving a DHCP offer message comprising a first Internet Protocol (IP) address allocated to the apparatus from the CCU, using the first IP address to request a configuration file from the CCU, wherein the configuration file comprises configuration parameters for the apparatus and a second IP address allocated to a neighboring apparatus, and configuring the apparatus based on the configuration parameters and forwarding the second IP address to the neighboring apparatus.

In a sixth implementation form of the second aspect, the first network topology information or the second network topology information is carried in an optional type-length-value (TLV) of the first LLDP packet or the second LLDP packet.

In a seventh implementation form of the second aspect, the local area network is installed on a train comprising a plurality of cars, and each of the apparatuses in the local area network is disposed in a respective car of the train.

Other aspects and features of the present application will become apparent to those with ordinarily skill in the art upon review of the following descriptions of specific embodiments of the apparatuses and methods for network topology detection.

### BRIEF DESCRIPTION OF DRAWINGS

The application can be more fully understood by reading the subsequent detailed description and examples with references made to the accompanying drawings, wherein:
Fig. 1 is a schematic diagram of a local area network according to an embodiment of the application;
Fig. 2 is a block diagram illustrating a network device according to an embodiment of the application;
Fig. 3 is a flow chart illustrating the method for network topology detection according to an embodiment of the application;
Fig. 4 is a schematic diagram illustrating the format of an LLDP packet according to an embodiment of the application; and
Figs. 5A∼5B show a message sequence chart illustrating the process of network topology detection according to an embodiment of the application.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

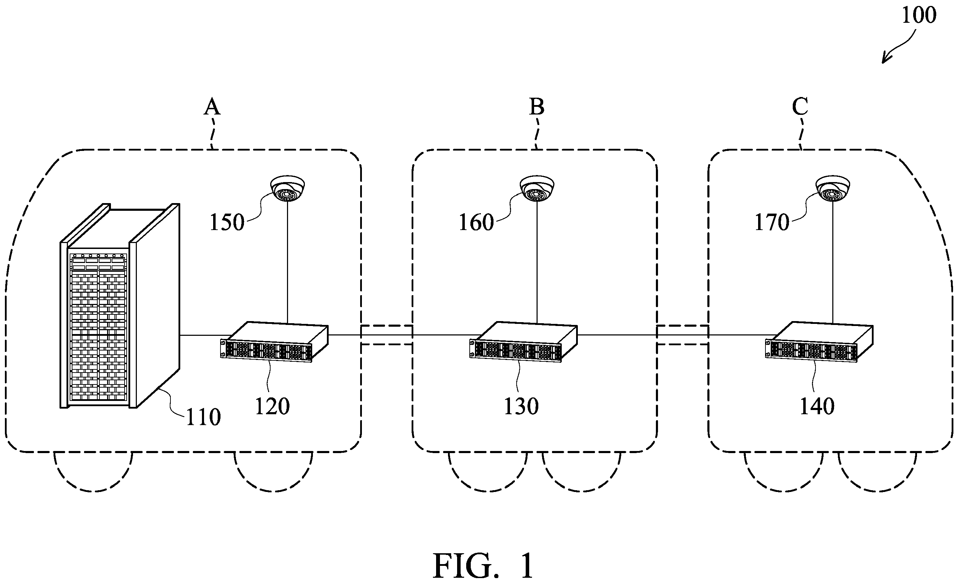

Fig. 1 is a schematic diagram of a local area network according to an embodiment of the application.

As shown in Fig. 1, the local area network 100 is installed on a train including 3 types of cars A, B, and C. For example, car A may be an Electric Motor Conductor (EMC), car B may be an Electric Trailer (ET), and car C may be an Electric Motor (EM).

The local area network 100 may a wired network (e.g., an Ethernet network) including a Central Control Unit (CCU) 110 and three network devices 120∼140. In the local area network 100, only the network device 120 is connected to the CCU 110, and the network device 130 is connected to both the network devices 120 and 140, while the network devices 120 and 140 are not directly connected to each other.

In another embodiment, the local area network 100 may be a wireless network, such as a Wireless-Fidelity (Wi-Fi) network, a Bluetooth network, a Zigbee network, or a telecommunication network, which utilize mediums including, but not limited to, Radio Frequency (RF), Infrared (IR), and/or microwave.

The CCU 110 may be a server integrating a plurality of server/database functions. For example, the CCU 110 may be installed with at least a Dynamic Host Configuration Protocol (DHCP) server, a Secure Copy Protocol (SCP) server, and a configuration file database (DB).

The DHCP server is configured to dynamically allocate an IP address and other network configuration parameters to each network device on the local area network 100, thereby enabling the network devices 120∼140 to communicate with each other.

The SCP server is configured to securely transfer configuration files between the configuration file DB and the network devices 120∼140, and the configuration files are encrypted using the Secure Shell (SSH) protocol during the file transfer process.

The configuration file DB is configured to store separate configuration file for each of the network devices 120∼140. The configuration file associated with a network device may include configuration parameters (such as Simple Network Management Protocol (SNMP) configuration parameters, and/or Virtual Local Area Network (VLAN) configuration parameters, etc.) for the network device, and an IP address for a neighbor network device (i.e., a network device neighboring the network device associated with the configuration file).

Alternatively, the CCU 110 may be further installed with a Domain Name System (DNS) server, an SNMP trap server, a time server, a Terminal Access Controller Access-Control System (TACACS) server, a Remote Authentication Dial In User Service (RADIUS) server, a Simple Mail Transfer Protocol (SMTP) server, a Syslog server, or any combination thereof, and the application should not be limited thereto.

Each of the network devices 120∼140 may be a switch, a router, or bridge which supports the function of packet routing. In particular, each of the network devices 120∼140 supports the function of network topology detection as disclosed in the present application. Each of the network devices 120∼140 may connect with one or more terminal devices (such as a machinery, robotic arm, security camera, or conveyor). For example, each of the network devices 120∼140 is connected with a respective one of the security cameras 150∼170.

It should be understood that the components described in the embodiment of Fig. 1 are for illustrative purposes only and are not intended to limit the scope of the application. For example, the local area network 100 may be installed in a different environment, such as an office, a building, or a factory, and it may include fewer or more network devices and/or terminal devices.

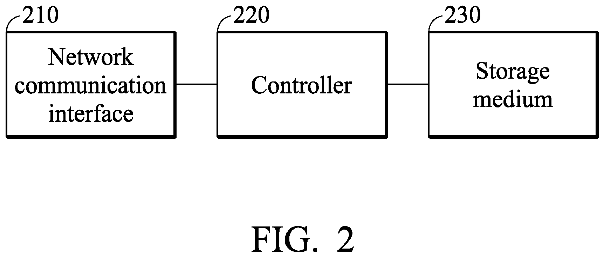

Fig. 2 is a block diagram illustrating a network device according to an embodiment of the application.

As shown in Fig. 2, a network device (e.g., the network device 120/130/140) may include a Network Communication Interface (NCI) 210, a controller 220, and a storage medium 230.

The NIC 210 is configured to enable the network device to communicate with other network devices and/or terminal devices in the local area network (e.g., the local area network 100). Specifically, the NIC 210 may include components such as a switching fabric, a plurality of ports, transmitters, receivers, transceivers, antennas, or the like, or any combination thereof.

The controller 220 may be a general-purpose processor, a Micro Control Unit (MCU), a Digital Signal Processor (DSP), or the like, which includes various circuits for providing the functions of data processing and computing, controlling the NIC 210 for communicating with other network devices and/or terminal devices, and storing and retrieving data (e.g., network topology information) to and from the storage medium 230.

In particular, the controller 220 coordinates the aforementioned operations of the NIC 210 and the storage medium 230 for performing the method for network topology detection.

As will be appreciated by persons skilled in the art, the circuits of the controller 220 may include transistors that are configured in such a way as to control the operation of the circuits in accordance with the functions and operations described herein. As will be further appreciated, the specific structure or interconnections of the transistors may be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage medium 230 may be a non-transitory machine-readable storage medium, including a memory, such as a FLASH memory or a Non-Volatile Random Access Memory (NVRAM), or a magnetic storage device, such as a hard disk or a magnetic tape, or an optical disc, or any combination thereof for storing data (e.g., network topology information), instructions, and/or program code of applications, communication protocols, and/or the method of the present application.

It should be understood that the components described in the embodiment of Fig. 2 are for illustrative purposes only and are not intended to limit the scope of the application. For example, a network device may include more components, such as an Input/Output (I/O) device (e.g., one or more buttons, one or more light emitters, a speaker, a keyboard, a mouse, a touch pad, and/or a display device).

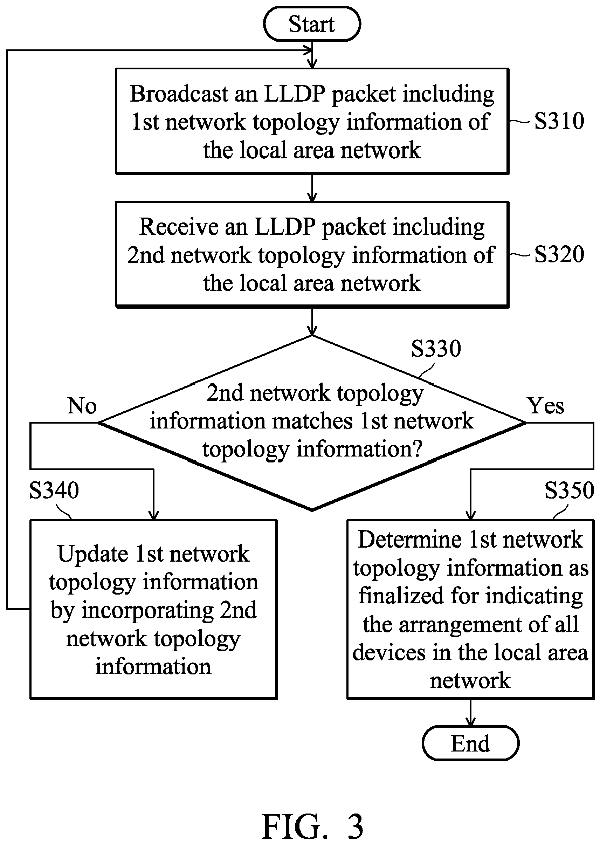

Fig. 3 is a flow chart illustrating the method for network topology detection according to an embodiment of the application.

In this embodiment, the method for network topology detection may be applied to and executed by a network device (e.g., the network device 120/130/140) disposed in a local area network (e.g., the local area network 100).

To begin with, the network device broadcasts an LLDP packet including first network topology information of the local area network (step S310).

Specifically, the first network topology information refers to network topology information learned by the network device. In one embodiment, the first network topology information is initially set to the indication of the type of car where of the network device is disposed, when the network device is powered on or reset.

For example, if it is the network device 120 performing the method for network topology detection, then the first network topology information may be initially set to "A" since the network device 120 is disposed on car A. If it is the network device 130 performing the method for network topology detection, then the first network topology information may be initially set to "B" since the network device 130 is disposed on car B. If it is the network device 140 performing the method for network topology detection, then the first network topology information may be initially set to "C" since the network device 140 is disposed on car C.

Subsequent to step S310, the network device receives an LLDP packet including second network topology information of the local area network (step S320). Specifically, the second LLDP packet is received from a neighboring network device in the local area network, and the second network topology information refers to network topology information learned by the neighboring network device.

In one embodiment, the first network topology information or the second network topology information may be carried in an optional type-length-value (TLV) of an LLDP packet.

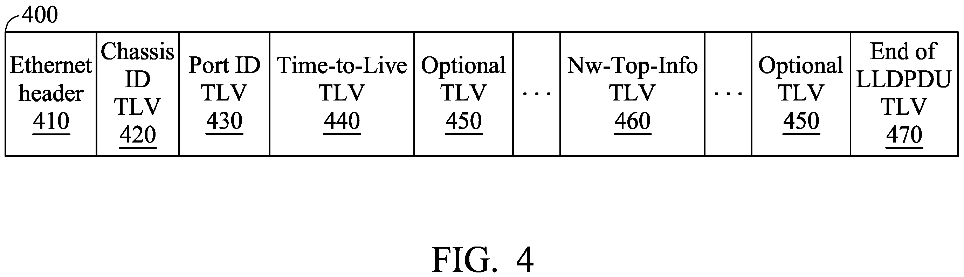

Fig. 4 is a schematic diagram illustrating the format of an LLDP packet according to an embodiment of the application.

As shown in Fig. 4, the LLDP packet 400 includes an Ethernet header 410, a chassis ID TLV 420, a port ID TLV 430, a time-to-live TLV 440, optional TLVs 450, a Nw-Top-Info TLV 460, and an end of Link Layer Discovery Protocol Data Unit (LLDPDU) TLV 470. As mentioned above, this LLDP packet 400 may be generated by a network device performing the method for network topology detection.

The Ethernet header 410 may include a preamble, destination MAC address, source MAC address, and Ethertype. The chassis ID TLV 420 may represent the chassis identification for the network device that sends the LLDP packet 400. The port ID TLV 430 may represent the identification of the specific port through which the LLDP packet 400 is sent. The time-to-live TLV 440 may represent the length of time that information contained in the LLDP packet 400 shall be valid. The optional TLVs 450 may represent custom or organizational specific commands per the Institute of Electrical and Electronics Engineers (IEEE) 802.1AB standard(s). The Nw-Top-Info TLV 460 may be an optional TLV that stores the network topology information learned by the network device that sends the LLDP packet 400. The end of LLDPDU TLV 470 may mark the end of the LLDP packet 400.

It should be noted that, unlike a conventional LLDP packet, the LLDP packet 400 includes an optional TLV (i.e., the Nw-Top-Info TLV 460) dedicated for the purpose of network topology detection.

Referring back to Fig. 3, in step S330, the network device determines whether the second network topology information matches the first network topology information.

Subsequent to step S330, if the second network topology information does not match the first network topology information, the network device updates the first network topology information by incorporating the second network topology information (step S340), and the method returns to step S310.

Subsequent to step S330, if the second network topology information matches the first network topology information, the network device determine the first network topology information as finalized for indicating the arrangement of all devices (e.g., including network devices and terminal devices) in the local area network (step S350), and the method ends.

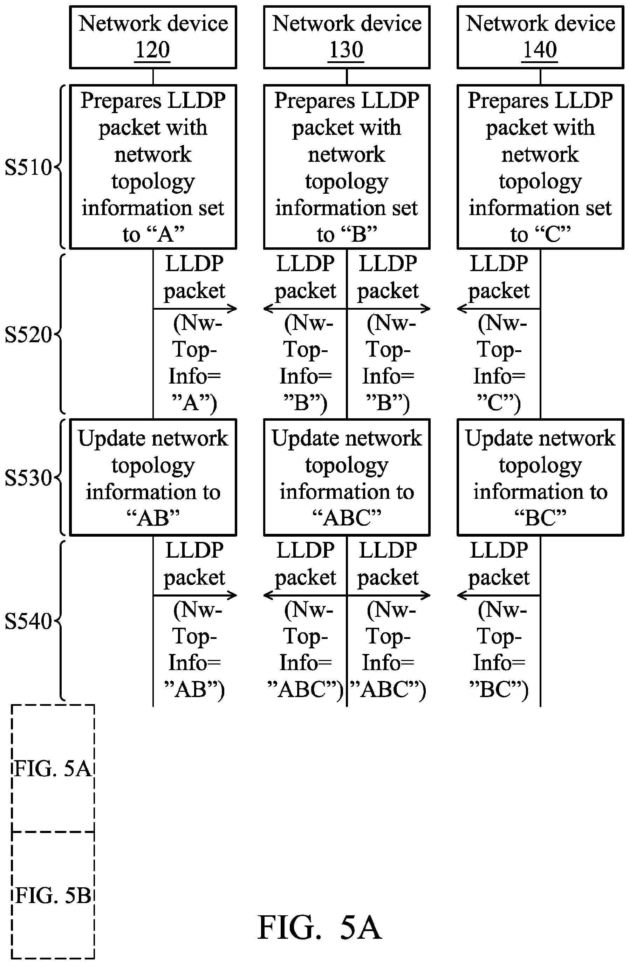

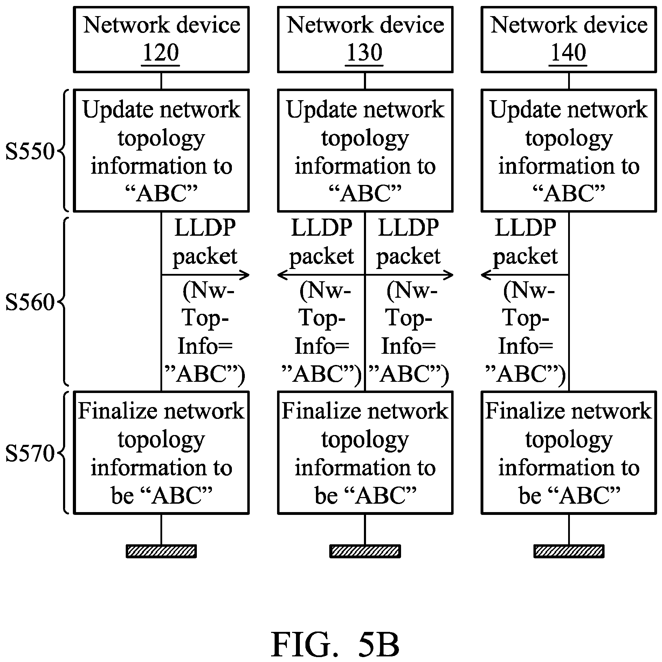

Figs. 5A∼5B show a message sequence chart illustrating the process of network topology detection according to an embodiment of the application.

In step S510, each network device prepares an LLDP packet with the network topology information which is set to the type of car where the network device is disposed. Specifically, the network device 120 sets the network topology information in the LLDP packet to "A"; the network device 130 sets the network topology information in the LLDP packet to "B"; and the network device 140 sets the network topology information in the LLDP packet to "C".

In step S520, each network device broadcasts the LLDP packet with the network topology information.

In step S530, each network device detects that its network topology information does not match the received network topology information, and then updates its network topology information by incorporating the received network topology information. Specifically, the network device 120 updates its network topology information to "AB"; the network device 130 updates its network topology information to "ABC"; and the network device 140 updates its network topology information to "BC".

In step S540, each network device prepares another LLDP packet with the updated network topology information and broadcasts this LLDP packet.

In step S550, each network device detects that its network topology information does not match the received network topology information, and then updates its network topology information again by incorporating the received network topology information. Specifically, the network device 120 updates its network topology information to "ABC"; the network device 130 updates its network topology information to "ABC"; and the network device 140 updates its network topology information to "ABC".

In step S560, each network device prepares another LLDP packet with the updated network topology information and broadcasts this LLDP packet.

In step S570, each network device detects that its network topology information matches the received network topology information, and then finalizes the network topology information to be "ABC" to end the network topology detection process.

After the network topology detection is completed, each network device may send a DHCP discover message including the finalized network topology information to a predetermined port of its NCI. In one embodiment, the predetermined port refers to the port that may be connected to the CCU 110, and this port may be called the CCU port. However, only the CCU port of the NCI of the network device 120 is connected to the CCU 110, while the CCU ports of the NCIs of the network devices 130∼140 are not connected to the CCU 110.

After that, the network device 120 may receive a DHCP offer message including an Internet Protocol (IP) address allocated to it from the CCU 110, and use the IP address to request the configuration file associated with the network device 120 from the CCU 110. Specifically, the configuration file may include the configuration parameters for the network device 120 and IP addresses allocated to the network device 130 and the terminal device 150.

In response to obtaining the configuration file, the network device 120 configures itself based on the configuration parameters included in the configuration file, and forwards the IP addresses to the network device 130 and the terminal device 150, thereby enabling them to request their own configuration files and forwarding IP addresses to neighboring devices. The iterative process may continue until every device in the local area network 100 has received its own configuration file.

In view of the forgoing embodiments, it will be appreciated that the present application realizes automation of network topology detection, by utilizing the Link Layer Discovery Protocol (LLDP) to communicate network topology information between devices until convergence of the communicated network topology information. Advantageously, the errors caused by manual detection of network topology may be avoided and the efficiency of the process of network topology detection may be improved.

While the application has been described by way of example and in terms of preferred embodiment, it should be understood that the application is not limited thereto. Those who are skilled in this technology can still make various alterations and modifications without departing from the scope and spirit of this application. Therefore, the scope of the present application shall be defined and protected by the following claims and their equivalents.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

## Claims

1. An apparatus (120, 130, 140), disposed in a local area network (100), comprising:
a Network Communication Interface (210), NCI, configured to enable the apparatus (120, 130, 140) to communicate with other apparatuses in the local area network (100);
a storage medium (230), configured to store first network topology information of the local area network (100); and
a controller (220), coupled to the storage medium (230) and the NCI (210), and configured to perform the following:
broadcasting a first Link Layer Discovery Protocol, LLDP, packet comprising first network topology information of the local area network (100) via the NCI (210);
receiving a second LLDP packet comprising second network topology information of the local area network (100) via the NCI (210);
in response to the second network topology information not matching the first network topology information, updating the first network topology information by incorporating the second network topology information; and
in response to the second network topology information matching the first network topology information, determining the first network topology information as finalized for indicating an arrangement of all apparatuses in the local area network (100).

2. The apparatus (120, 130, 140) as claimed in claim 1, wherein the controller (220) is further configured to perform the following:
before broadcasting the first LLDP packet, setting the first network topology information of the local area network (100) to an indication of a type of car where of the apparatus is disposed.

3. The apparatus (120, 130, 140) as claimed in claim 1, wherein the controller (220) is further configured to perform the following in response to the second network topology information not matching the first network topology information:
broadcasting a third LLDP packet comprising the updated first network topology information of the local area network (100) via the NCI (210);
receiving a fourth LLDP packet comprising third network topology information of the local area network (100) via the NCI (210);
in response to the third network topology information not matching the updated first network topology information, further updating the first network topology information by incorporating the third network topology information; and
in response to the third network topology information matching the updated first network topology information, determining the updated first network topology information as finalized for indicating the arrangement of all apparatuses in the local area network (100).

4. The apparatus (120, 130, 140) as claimed in claim 1 or claim 3, wherein the controller (220) is further configured to perform the following:
sending a Dynamic Host Configuration Protocol, DHCP, discover message comprising the finalized first network topology information to a predetermined port of the NCI (210).

5. The apparatus (120, 130, 140) as claimed in claim 4, wherein the predetermined port is connected to a Central Control Unit (110), CCU, of the local area network (100).

6. The apparatus (120, 130, 140) as claimed in claim 4, wherein the controller (220) is further configured to perform the following:
in response to sending the DHCP discover message, receiving a DHCP offer message comprising a first Internet Protocol, IP, address allocated to the apparatus (120, 130, 140) from the CCU (110) via the NCI (210);
using the first IP address to request a configuration file from the CCU (110) via the NCI (210), wherein the configuration file comprises configuration parameters for the apparatus and a second IP address allocated to a neighboring apparatus; and
configuring the apparatus (120, 130, 140) based on the configuration parameters and forwarding the second IP address to the neighboring apparatus via the NCI (210).

7. The apparatus (120, 130, 140) as claimed in claim 1, wherein the first network topology information or the second network topology information is carried in an optional type-length-value, TLV, of the first LLDP packet or the second LLDP packet.

8. A method, executed by an apparatus (120, 130, 140) capable of communicating with other apparatuses in a local area network (100), the method comprising:
Broadcasting (S310) a first Link Layer Discovery Protocol, LLDP, packet comprising first network topology information of the local area network (100);
Receiving (S320) a second LLDP packet comprising second network topology information of the local area network (100);
in response to the second network topology information not matching the first network topology information, updating (S340) the first network topology information by incorporating the second network topology information; and
in response to the second network topology information matching the first network topology information, determining (S350) the first network topology information as finalized for indicating an arrangement of all apparatuses in the local area network (100).

9. The method as claimed in claim 8, further comprising:
before broadcasting the first LLDP packet, setting the first network topology information of the local area network (100) to an indication of a type of car where of the apparatus is disposed.

10. The method as claimed in claim 8, further comprising the following in response to the second network topology information not matching the first network topology information:
broadcasting a third LLDP packet comprising the updated first network topology information of the local area network (100);
receiving a fourth LLDP packet comprising third network topology information of the local area network (100);
in response to the third network topology information not matching the updated first network topology information, further updating the first network topology information by incorporating the third network topology information; and
in response to the third network topology information matching the updated first network topology information, determining the updated first network topology information as finalized for indicating the arrangement of all apparatuses in the local area network (100).

11. The method as claimed in claim 8 or claim 10, further comprising:
sending a Dynamic Host Configuration Protocol, DHCP, discover message comprising the finalized first network topology information to a predetermined port of a Network Communication Interface, NCI, of the apparatus (120, 130, 140).

12. The method as claimed in claim 11, wherein the predetermined port is connected to a Central Control Unit (110), CCU, of the local area network (100).

13. The method as claimed in claim 11, further comprising:
in response to sending the DHCP discover message, receiving a DHCP offer message comprising a first Internet Protocol, IP, address allocated to the apparatus (120, 130, 140) from the CCU (110),
using the first IP address to request a configuration file from the CCU (110), wherein the configuration file comprises configuration parameters for the apparatus (120, 130, 140) and a second IP address allocated to a neighboring apparatus, and
configuring the apparatus (120, 130, 140) based on the configuration parameters and forwarding the second IP address to the neighboring apparatus.

14. The method as claimed in claim 8, wherein the first network topology information or the second network topology information is carried in an optional type-length-value, TLV, of the first LLDP packet or the second LLDP packet.

15. The method as claimed in claim 8, wherein the local area network (100) is installed on a train comprising a plurality of cars, and each of the apparatuses (120, 130, 140) in the local area network (100) is disposed in a respective car of the train.

## Amended claims

### Amended claims in accordance with Rule 137(2) EPC.

1. An apparatus (120, 130, 140), disposed in a local area network (100), comprising:
a Network Communication Interface (210), NCI, configured to enable the apparatus (120, 130, 140) to communicate with other apparatuses in the local area network (100);
a storage medium (230), configured to store first network topology information of the local area network (100); and
a controller (220), coupled to the storage medium (230) and the NCI (210), and configured to perform the following:
broadcasting a first Link Layer Discovery Protocol, LLDP, packet comprising first network topology information of the local area network (100) via the NCI (210);
receiving a second LLDP packet comprising second network topology information of the local area network (100) from another apparatus (120, 130, 140) in the local area network (100) via the NCI (210);
in response to the second network topology information not matching the first network topology information, updating the first network topology information by incorporating the second network topology information; and
in response to the second network topology information matching the first network topology information, determining the first network topology information as finalized for indicating an arrangement of all apparatuses in the local area network (100);
wherein the apparatus (120, 130, 140) is **characterized in that**:
the first network topology information comprises an indication of a first type of car where the apparatus (120, 130, 140) is disposed; and
the second network topology information comprises an indication of a second type of car where the other apparatus (120, 130, 140) is disposed.

2. The apparatus (120, 130, 140) as claimed in claim 1, wherein the controller (220) is further configured to perform the following in response to the second network topology information not matching the first network topology information:
broadcasting a third LLDP packet comprising the updated first network topology information of the local area network (100) via the NCI (210);
receiving a fourth LLDP packet comprising third network topology information of the local area network (100) via the NCI (210);
in response to the third network topology information not matching the updated first network topology information, further updating the first network topology information by incorporating the third network topology information; and
in response to the third network topology information matching the updated first network topology information, determining the updated first network topology information as finalized for indicating the arrangement of all apparatuses in the local area network (100).

3. The apparatus (120, 130, 140) as claimed in claim 1 or claim 2, wherein the controller (220) is further configured to perform the following:
sending a Dynamic Host Configuration Protocol, DHCP, discover message comprising the finalized first network topology information to a predetermined port of the NCI (210).

4. The apparatus (120, 130, 140) as claimed in claim 3, wherein the predetermined port is connected to a Central Control Unit (110), CCU, of the local area network (100).

5. The apparatus (120, 130, 140) as claimed in claim 3, wherein the controller (220) is further configured to perform the following:
in response to sending the DHCP discover message, receiving a DHCP offer message comprising a first Internet Protocol, IP, address allocated to the apparatus (120, 130, 140) from the CCU (110) via the NCI (210);
using the first IP address to request a configuration file from the CCU (110) via the NCI (210), wherein the configuration file comprises configuration parameters for the apparatus and a second IP address allocated to a neighboring apparatus; and
configuring the apparatus (120, 130, 140) based on the configuration parameters and forwarding the second IP address to the neighboring apparatus via the NCI (210).

6. The apparatus (120, 130, 140) as claimed in claim 1, wherein the first network topology information or the second network topology information is carried in an optional type-length-value, TLV, of the first LLDP packet or the second LLDP packet.

7. A method, executed by an apparatus (120, 130, 140) capable of communicating with other apparatuses in a local area network (100), the method comprising:
broadcasting (S310) a first Link Layer Discovery Protocol, LLDP, packet comprising first network topology information of the local area network (100);
receiving (S320) a second LLDP packet comprising second network topology information of the local area network (100) from another apparatus (120, 130, 140) in the local area network (100);
in response to the second network topology information not matching the first network topology information, updating (S340) the first network topology information by incorporating the second network topology information; and
in response to the second network topology information matching the first network topology information, determining (S350) the first network topology information as finalized for indicating an arrangement of all apparatuses in the local area network (100);
wherein the method is **characterized in that**:
the first network topology information comprises an indication of a first type of car where the apparatus (120, 130, 140) is disposed; and
the second network topology information comprises an indication of a second type of car where the other apparatus (120, 130, 140) is disposed.

8. The method as claimed in claim 7, further comprising the following in response to the second network topology information not matching the first network topology information:
broadcasting a third LLDP packet comprising the updated first network topology information of the local area network (100);
receiving a fourth LLDP packet comprising third network topology information of the local area network (100);
in response to the third network topology information not matching the updated first network topology information, further updating the first network topology information by incorporating the third network topology information; and
in response to the third network topology information matching the updated first network topology information, determining the updated first network topology information as finalized for indicating the arrangement of all apparatuses in the local area network (100).

9. The method as claimed in claim 7 or claim 8, further comprising:
sending a Dynamic Host Configuration Protocol, DHCP, discover message comprising the finalized first network topology information to a predetermined port of a Network Communication Interface, NCI, of the apparatus (120, 130, 140).

10. The method as claimed in claim 9, wherein the predetermined port is connected to a Central Control Unit (110), CCU, of the local area network (100).

11. The method as claimed in claim 9, further comprising:
in response to sending the DHCP discover message, receiving a DHCP offer message comprising a first Internet Protocol, IP, address allocated to the apparatus (120, 130, 140) from the CCU (110),
using the first IP address to request a configuration file from the CCU (110), wherein the configuration file comprises configuration parameters for the apparatus (120, 130, 140) and a second IP address allocated to a neighboring apparatus, and
configuring the apparatus (120, 130, 140) based on the configuration parameters and forwarding the second IP address to the neighboring apparatus.

12. The method as claimed in claim 7, wherein the first network topology information or the second network topology information is carried in an optional type-length-value, TLV, of the first LLDP packet or the second LLDP packet.

13. The method as claimed in claim 7, wherein the local area network (100) is installed on a train comprising a plurality of cars, and each of the apparatuses (120, 130, 140) in the local area network (100) is disposed in a respective car of the train.
